# EUROPÄISCHE PATENTSCHRIFT

(11) **EP 3 037 243 B1**
(45) Veröffentlichungstag und Bekanntmachung des Hinweises auf die Patenterteilung: **21.11.2018**
(21) Anmeldenummer: 14199825.2
(22) Anmeldetag: 22.12.2014
(51) Int. Cl.: B29C 63/04, B29C 65/60

(54) **Vorrichtung und Verfahren zum Umbugen**
Method and device for edgefolding
Dispositif et procédé de rembordement

(43) Veröffentlichungstag der Anmeldung: 29.06.2016
(73) Patentinhaber: Dr. Stoffel, Kai Konstantin, 6020 Innsbruck (AT)
(72) Erfinder: Stoffel, Kai Konstantin, Dr., 6020 Innsbruck (AT); Peimpolt, Markus, Ing., 6020 Innsbruck (AT)
(74) Vertreter: Wunderlich & Heim Patentanwälte Partnerschaftsgesellschaft mbB

(56) Entgegenhaltungen:
- WO-A1-99/43518
- JP-A- H07 299 868

## Beschreibung

Die Erfindung betrifft eine Vorrichtung zum Umbugen einer überstehenden Dekorschicht an einem Rand eines Werkstücks, mit einer Halterung zum Halten des Werkstücks und mindestens einem Umbugstempel, mit welchem die überstehende Dekorschicht des in der Halterung angeordneten Werkstücks an eine Rückseite des Randes des Werkstücks umlegbar ist, gemäß dem Oberbegriff des Anspruchs 1.

Die Erfindung betrifft weiterhin ein Verfahren zum Umbugen einer überstehenden Dekorschicht an einem Rand eines Werkstücks, wobei das Werkstück in einer Halterung gehalten wird und mittels mindestens einem Umbugstempel die überstehende Dekorschicht umgelegt und an einer Rückseite des Randes des Werkstücks angelegt wird, gemäß dem Oberbegriff des Anspruchs 7.

Umbugvorrichtungen werden insbesondere zur Bearbeitung von Werkstücken eingesetzt, welche durch ein sogenanntes Hinterspritzen hergestellt sind. Dabei wird eine Dekorschicht, welche ein Textil, eine Folie, ein Papier etc. sein kann, in eine Spritzgießform des Kunststoffwerkstückes eingelegt, so dass die Dekorschicht beim Spritzgießen integriert mit dem Werkstück verbunden wird. Bei diesem Hinterspritzen lässt sich ein gewisses seitliches Überstehen der flexiblen Dekorschicht gegenüber dem Werkstück nicht vermeiden oder wird sogar gewünscht. Beim Umbugen dieser überstehenden Dekorschicht wird diese nicht, wie häufig üblich, durch Abtrennen entfernt, sondern auf eine Rückseite des Werkstücks umgelegt und an die Werkstückrückseite angelegt. Damit erstreckt sich die Dekorschicht auch über einen Kantenbereich des Werkstücks hinaus, was insbesondere für Werkstücke mit höherer Wertanmutung gewünscht ist, wie sie etwa im Innenausbau eines Kraftfahrzeuges verlangt sind.

Umbugvorrichtungen sind etwa aus der WO 99/43518 A1 oder der DE 101 36 325 A1 bekannt.

Nach dem Umbugen werden Werkstücke häufig einer weiteren Bearbeitung unterzogen. Hierfür werden beispielsweise die Werkstücke mit weiteren Bauteilen versehen, welche an das Werkstück angeschraubt oder angeklebt werden.

Eine gattungsgemäße Umbugvorrichtung geht aus der JP H07 299868 A hervor. Die umzubugende Dekorschicht wird in ihrem Randbereich mit Löchern versehen, so dass die Dekorschicht über Zapfen an der Rückseite des Werkstücks umgebugt werden kann.

Der Erfindung liegt die **Aufgabe** zugrunde, eine Vorrichtung und ein Verfahren zum Umbugen einer überstehenden Dekorschicht anzugeben, mit welchen eine besonders effiziente Bearbeitung ermöglicht werden.

Die Aufgabe wird zum einen durch eine Vorrichtung mit den Merkmalen des Anspruchs 1 und zum anderen mit einem Verfahren mit den Merkmalen des Anspruchs 6 gelöst.

Bevorzugte Ausführungsformen der Erfindung sind in den jeweils abhängigen Ansprüchen angegeben.

Die erfindungsgemäße Vorrichtung weist eine Halterung und eine Nieteinrichtung mit mindestens einem beheizbaren Nietstempel auf. Das Werkstück wird mit der Vorrichtung aus mindestens zwei Bauteilen aufgebaut, indem mittels der Nieteinrichtung mindestens zwei Bauteile zu einem Werkstück vernietet werden, während das Werkstück in der Halterung aufgenommen ist. Ein Grundgedanke der Erfindung kann darin gesehen werden, in der Umbugvorrichtung an dem Werkstück in derselben Einspannung mindestens einen weiteren Bearbeitungsvorgang durchzuführen. Gemäß der Erfindung umfasst dieser weitere Bearbeitungsvorgang zumindest in thermisches Vernieten, wobei zumindest zwei Bauteile zu dem Werkstück mit dem umgebugten Rand verbunden werden. Es kann so ein komplex aufgebautes Werkstück gefertigt werden.

So können an einem Werkstück mit der umgebugten Dekorschicht eine Vielzahl von Bauteilen effizient vorgesehen werden. Insbesondere bei Werkstücken für den Innenausbau von Kraftfahrzeugen können etwa unterschiedliche Dekor- oder Funktionselemente vorgesehen werden, insbesondere ein Abdeckelement oder Abdeckgitter für einen Lautsprecher oder ein Lüftungselement.

Eine bevorzugte Ausführungsform der Erfindung besteht darin, dass der mindestens eine Nietstempel verfahrbar gelagert ist und über einen Stellzylinder zwischen einer

Nietposition und einer Rückzugsposition verstellbar ist, in welcher der Nietstempel von dem Werkstück beabstandet ist. Der Nietstempel kann dabei gleichzeitig oder zeitlich versetzt zu einem Umbugstempel an das Werkstück verfahren werden. Dabei kann der Nietstempel ebenso wie der Umbugstempel unmittelbar durch einen Stellzylinder verfahren werden. Alternativ kann ein relatives Verfahren zwischen dem Nietstempel und dem Werkstück auch dadurch erreicht werden, dass durch einen entsprechenden Hubzylinder die Halterung mit dem Werkstück gegen den Nietstempel verfahren wird.

Eine besonders zuverlässige und kompakte Anordnung wird nach einer Weiterbildung der Erfindung dadurch erreicht, dass der Stellzylinder mit einem Druckfluid betätigbar ist. Das Druckfluid kann grundsätzlich eine Hydraulikflüssigkeit sein. Besonders bevorzugt ist jedoch die Verwendung von Druckluft als Druckfluid. Bei Druckluft kann eine Entlüftung gegenüber der Atmosphäre erfolgen. Zudem besteht eine geringe Leckageproblematik.

Erfindungsgemäß ist es vorgesehen, dass durch den Nietstempel mindestens ein Nietzapfen verformbar ist, welcher an dem Bauteil angeordnet ist und durch eine Nietbohrung in einem anderen Bauteil gesteckt ist. Der Nietzapfen an dem Bauteil ist dabei stiftförmig oder keilförmig ausgebildet, so dass dieser durch eine Nietbohrung in einen rückwärtigen Bereich ragt. Durch Kontaktieren des beheizten Nietstempels wird der Nietzapfen aus einem thermoplastischen Material verformt und zu einem Nietkopf umgeformt. Hierdurch wird eine Nietverbindung zwischen den Bauteilen geschaffen. Vorzugsweise ist eine Vielzahl von Nietzapfen an verschiedenen Positionen vorgesehen, so dass eine entsprechend stabile Nietverbindung gebildet werden kann.

Eine besonders zweckmäßige Ausführungsform wird nach der Erfindung dadurch erreicht, dass der Nietstempel elektrisch beheizt ist. Insbesondere kann der Nietstempel eine Heizpatrone aufweisen. Die Heizpatrone kann dabei gleich oder ähnlich zu der Heizeinrichtung der Umbugstempel ausgebildet sein. Insbesondere können Nietstempel und Umbugstempel durch gleiche oder ähnliche Stelleinrichtungen verfahren werden. Auch die Andruckkräfte von Nietstempel und Umbugstempel sind vergleichbar, so dass die Halterung des Werkstückes für beide Bearbeitungsvorgänge ausreichend ist. Besonders bevorzugt ist es nach der Erfindung, dass eine Sensoreinrichtung vorgesehen ist, mit welcher das Vorhandensein der Bauteile in der Halterung und/oder eine korrekte Vernietung überprüfbar sind. Für eine korrekte Durchführung des Bearbeitungsvorganges kann dabei zunächst durch die Sensoreinrichtung überprüft und festgestellt werden, ob die Bauteile in korrekter Weise in die Halterung eingesetzt wurden. Sollte dies nicht der Fall sein, so kann über eine mit der Sensoreinrichtung verbundene Steuereinrichtung ein Warnsignal ausgegeben werden und der Bearbeitungsvorgang bis zur Fehlerbehebung durch einen Bediener gestoppt werden. Alternativ oder ergänzend kann durch die Sensoreinrichtung auch festgestellt werden, ob der Nietvorgang korrekt durchgeführt worden ist, etwa dadurch, ob die Nietstempel in ihre Endposition verfahren worden sind. Die Sensoreinrichtung kann etwa optische, mechanische, induktive oder kapazitive Sensoren oder eine Kombination hiervon aufweisen.

Hinsichtlich des Verfahrens ist die Erfindung dadurch gekennzeichnet, dass das Werkstück aus mindestens zwei Bauteilen gebildet wird, dass die Bauteile in der Halterung angeordnet werden und dass mittels der Nieteinrichtung mit mindestens einem beheizbaren Nietstempel die Bauteile zu dem Werkstück vernietet werden, während das Werkstück in der Halterung aufgenommen ist. Nach dem erfindungsgemäßen Verfahren können so mehrere Bearbeitungsschritte in der Umbugvorrichtung durchgeführt werden. Vorzugsweise kann das erfindungsgemäße Verfahren mit einer Vorrichtung zum Umbugen durchgeführt werden, welche zuvor beschrieben wurde. Insgesamt können die zuvor beschriebenen Vorteile erreicht werden.

Eine bevorzugte Ausführungsvariante des erfindungsgemäßen Verfahrens besteht darin, dass der mindestens eine Nietstempel mittels eines Stellzylinders zwischen einer Nietposition und einer Rückzugsposition verstellt wird, in welcher der Nietstempel von dem Werkstück beabstandet ist. Insbesondere ist der Nietstempel in der Rückzugsposition ebenso wie auch die Umbugstempel so angeordnet, dass das Werkstück in die Halterung eingelegt oder hieraus entnommen werden kann. Weiter ist die Verfahrgeschwindigkeit des Kolbens des Stellzylinders abhängig der Heiztemperatur des Nietstempels so eingestellt, dass ein zuverlässiges Vernieten und damit Umformen des Nietzapfens ermöglicht werden.

Weiterhin ist es nach einer Variante des erfindungsgemäßen Verfahrens bevorzugt, dass die Bauteile vor oder bei dem Einsetzen in die Halterung über eine Steckverbindung zu dem Werkstück verbunden werden. Dabei können der oder die Nietzapfen zum Bilden einer losen ersten Steckverbindung dienen. So kann das Werkstück bereits aus den zusammengesteckten Bauteilen gebildet sein und in die Halterung eingelegt werden. Alternativ ist es auch möglich, zunächst etwa die Bauteile in die Halterung einzulegen und darin das Werkstück zu bilden. Anschließend können dann das Umbugen sowie das Vernieten gemäß der Erfindung erfolgen.

Eine besonders gute Vorjustierung wird nach einer weiteren Ausführungsform der Erfindung dadurch erreicht, dass zum Bilden der Steckverbindung an zumindest einem Bauteil mindestens ein Nietzapfen vorgesehen wird, welcher durch eine Nietbohrung an einem anderen Bauteil hindurchragt, und dass der Nietzapfen durch den Nietstempel thermisch verformt und ein Nietkopf zum Bilden der Nietverbindung ausgebildet ist. Dabei bilden der stiftförmige Nietzapfen und die Nietbohrung vorzugsweise eine leichte Presspassung, so dass die Bauteile beim Zusammenstecken zunächst lose miteinander verbunden sind. Ein festes Verbinden erfolgt dann durch das thermische Verschweißen mittels der Nietstempel.

Nach einer weiteren Ausführungsform der Erfindung ist es dabei zweckmäßig, dass zumindest ein Bauteil aus einem thermoplastischen Material gebildet werden. Insbesondere ist das Material ein thermoplastischer Kunststoff, welcher vorzugsweise in einem Temperaturbereich zwischen 100°C und 240°C aufschmilzt und hierbei thermisch verformbar ist.

Dabei ist es gemäß einer Weiterbildung der Erfindung vorgesehen, dass der Nietstempel auf eine Niettemperatur aufgeheizt wird, welche über einer Umformtemperatur des Materials des Nietzapfens liegt. Üblicherweise wird die Niettemperatur des Nietstempels über eine elektrische Heizspule und eine Steuereinrichtung so eingestellt, dass diese geringfügig und definiert über der Umformtemperatur oder Schmelztemperatur des Materials des Nietzapfens liegt. Vorzugsweise wird die Niettemperatur auf einen Temperaturbereich zwischen 140°C und 260°C eingestellt.

Sobald das Werkstück mit den Bauteilen in der Halterung angeordnet ist, kann die Bearbeitung durch Umbugen und Vernieten erfolgen. Dabei können das Umbugen und das Vernieten zeitlich beabstandet zueinander jedoch in derselben Einspannung des Werkstücks durchgeführt werden. Besonders bevorzugt ist es nach einer Ausführungsvariante der Erfindung, dass gleichzeitig mit dem Vernieten ein Umbugen der überstehenden Dekorschicht des Werkstücks erfolgt, welches in der Halterung aufgenommen ist. Durch ein gleichzeitiges Durchführen der beiden Verfahrensschritte kann die Gesamtbearbeitungszeit reduziert und so der Nutzungsgrad der Umbugvorrichtung erhöht werden.

Eine bevorzugte Weiterbildung des erfindungsgemäßen Verfahrens besteht zudem darin, dass mittels einer Sensoreinrichtung das Vorhandensein der Bauteile in der Halterung und/oder eine korrekte Vernietung überprüft werden. Hierdurch kann sichergestellt werden, dass ein fehlerfreies Fertigteil erzeugt wird.

Diese Verfahrensvariante ist erfindungsgemäß dadurch weitergebildet, dass ein Vernieten und/oder Umbugen durch eine Steuereinheit veranlasst wird, wenn über die Sensoreinrichtung festgestellt ist, dass die Bauteile korrekt vernietet worden ist. Sofern von der Sensoreinrichtung ein Fehler beim Einlegen der Bauteile oder beim Vernieten festgestellt worden ist, wird ein entsprechendes Fehlersignal an die Steuereinheit abgegeben. Die Steuereinheit kann dann ein Warnsignal und/oder eine Unterbrechung des weiteren Bearbeitungsvorganges bewirken.

Die Erfindung wird nachfolgend anhand eines bevorzugten Ausführungsbeispiels weiter erläutert, welches schematisch in den Zeichnungen dargestellt ist. In den Zeichnungen zeigen:
- Fig. 1: eine erste perspektivische Ansicht eines gemäß der Erfindung hergestellten Werkstücks;
- Fig. 2: eine zweite perspektivische Ansicht des Werkstücks von Fig. 1;
- Fig. 3: eine perspektivische Ansicht von Komponenten einer erfindungsgemäßen Vorrichtung;
- Fig. 4: eine perspektivische Ansicht einer Umbugeinrichtung für die Vorrichtung nach Fig. 3; und
- Fig. 5: eine perspektivische vergrößerte Ansicht einer Nieteinheit der Vorrichtung von Fig. 3.

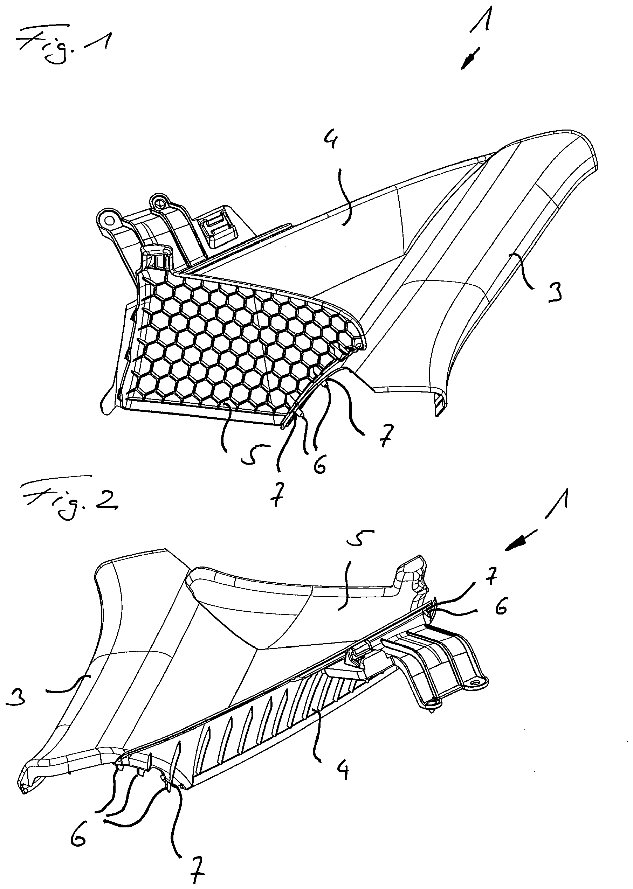

In den Figuren 1 und 2 ist ein Werkstück 1 dargestellt, welches aus drei Bauteilen 3, 4, 5 aus Kunststoff aufgebaut ist. Wie teilweise den Figuren zu entnehmen ist, weisen die Bauteile 3, 4, 5 in ihren Seitenbereichen, an welchen die Teile miteinander verbunden werden, vorstehende Nietzapfen 6 auf, welche durch hierzu passende Nietbohrungen 7 in dem jeweils angrenzenden Bauteil gesteckt werden. Die Nietzapfen 6 sind teilweise bolzenförmig oder keilförmig ausgebildet. An den Bauteilen 3, 4, 5 ist eine Dekorschicht angebracht, welche entlang eines freien äußeren Randes mit einem Betrag von etwa 1 bis 2 cm übersteht. Aus Übersichtlichkeitsgründen ist diese Dekorschicht mit dem überstehenden Randbereich nicht dargestellt.

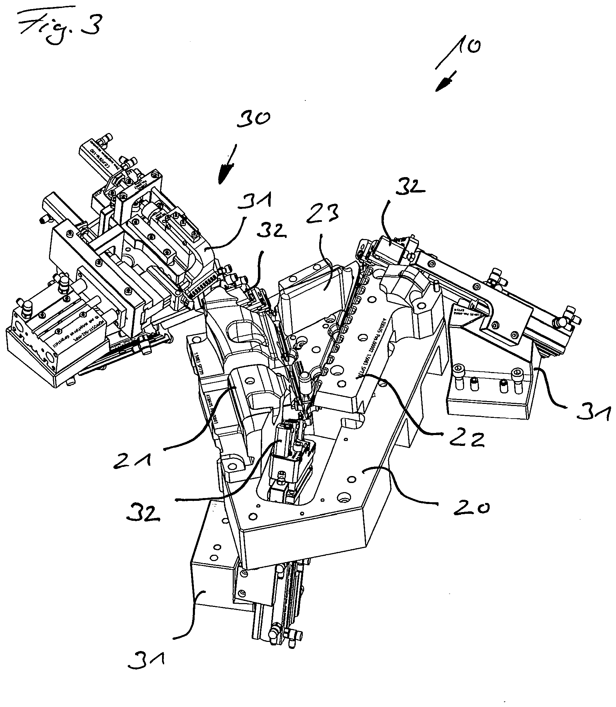

Das gemäß Figuren 1 und 2 lose zusammengesteckte Werkstück 1 wird in eine erfindungsgemäße Vorrichtung 10 zum Umbugen der überstehenden Dekorschicht eingesetzt. Die Vorrichtung 10 ist mit einigen wesentlichen Komponenten in Fig. 3 dargestellt. Die Vorrichtung 10 weist eine plattenförmige Halterung 20 auf, welche auf einer nicht dargestellten Grundplatte der Vorrichtung 10 angeordnet ist. Die Halterung 20 weist einen ersten Aufnahmebereich 21 für das erste Bauteil 3, einen zweiten Aufnahmebereich 22 für das zweite Bauteil 4 und einen dritten Aufnahmebereich 23 für das dritte Bauteil 4 des Werkstücks 1 auf. Auf diese Weise kann das etwa dreieckige zusammengesteckte Werkstück 1 in die Halterung 20 eingesetzt werden, wobei die Bauteile 3, 4, 5 von den Aufnahmebereichen 21, 22, 23 unterstützt und gehalten werden. Zusätzlich kann ein Gegenelement auf das in die Halterung 20 eingesetzte Werkstück 1 von oben aufgefahren werden, um nötigenfalls eine feste Einspannung zu gewährleisten.

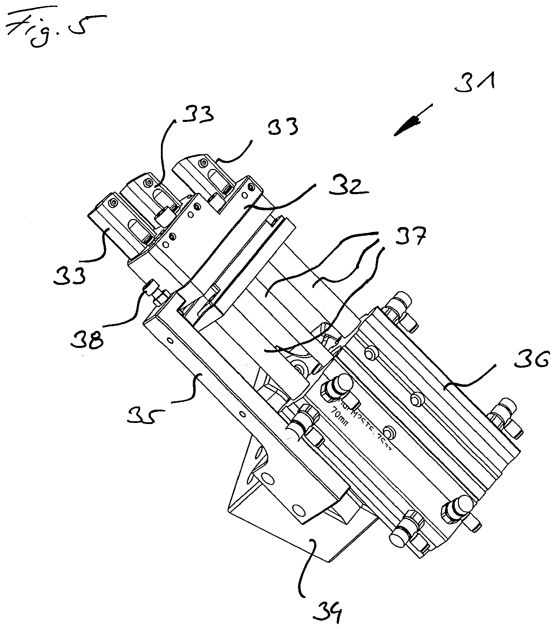

Auf der nicht dargestellten Grundplatte der Vorrichtung 10 ist eine Nieteinrichtung 30 mit drei Nieteinheiten 31 befestigt. Jede Nieteinheit 31 weist einen linear verfahrbaren Nietstempel 32 auf, mit welchen die vorstehenden Bereiche der Nietzapfen 6 an dem Werkstück 1 zu Nietköpfen verformt werden können, so dass die Bauteile 3, 4, 5 über entsprechende Nietverbindungen fest zu dem Werkstück 1 verbunden werden. Der Aufbau einer Nieteinheit 31 wird nachfolgend im Zusammenhang mit Fig. 5 noch näher erläutert werden.

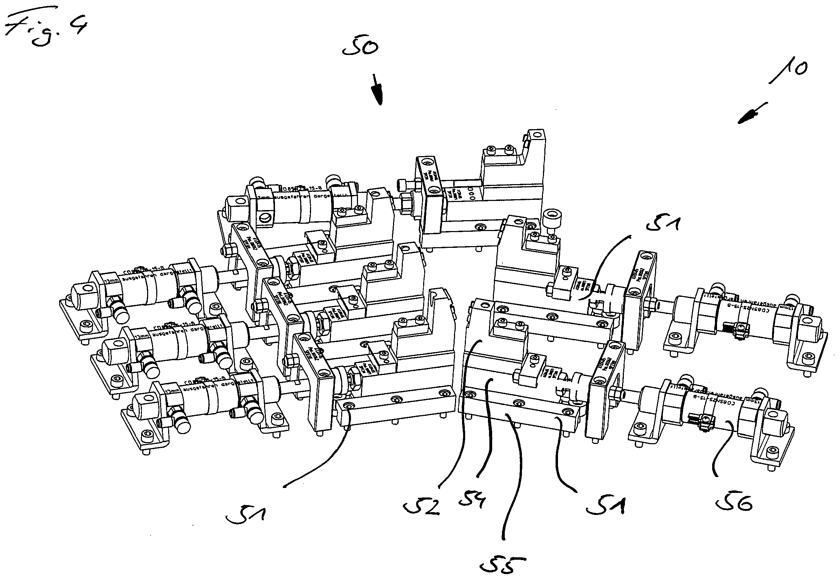

An einer Grundplatte der erfindungsgemäßen Vorrichtung 10 ist weiterhin eine Umbugeinrichtung 50 angeordnet, welche aus Übersichtlichkeitsgründen separat in Fig. 4 dargestellt ist. Die Umbugeinrichtung 50 ist aus einer Vielzahl im Wesentlichen gleich aufgebauter Umbugeinheiten 51 aufgebaut. Jede Umbugeinheit 51 weist einen Umbugstempel 52 auf, welcher über eine elektrische Heizeinrichtung beheizbar ist. Der Umbugstempel 52 ist an einem Schlitten 54 angebracht, welcher in einer Schlittenführung 55 axial verschiebbar geführt ist. Über einen rückwärtigen Verfahrzylinder 56, welcher üblicherweise ein Pneumatik- oder Hydraulikzylinder ist, ist der Schlitten 54 mit dem Umbugstempel 52 zwischen einer vom Werkstück 1 beabstandeten Rückzugsposition und einer Umbugposition linear verschiebbar. In der Umbugposition drückt der Umbugstempel 52 die überstehende Dekorschicht an die im vorliegenden Ausführungsbeispiel nach außen weisende Rückseite des Werkstücks 1 an. Durch eine entsprechende Heiztemperatur des beheizten Umbugstempels 52 kann die über den Rand des Werkstücks 1 umgelegte Dekorschicht an der Rückseite des Werkstücks 1 thermisch angeschweißt werden.

Gemäß Fig. 5 ist eine Nieteinheit 31 der Nieteinrichtung 30 von Fig. 3 näher dargestellt. Die Nieteinheit 31 weist einen blockförmigen Grundkörper 34 auf, an welcher verstellbar eine Linearführung angeordnet ist, entlang welcher ein blockartiger Nietstempel 32 linear verfahrbar ist. Zum linearen Verfahren ist ein Stellzylinder 36 mit einem ausfahrbaren Kolben 37 an dem Grundkörper 34 angebracht. Die Kolben 37 sind mit dem blockförmigen Nietstempel 32 verbunden. Die äußeren Kolben 37 können der Führung dienen.

Zum Vernieten von insgesamt drei Nietzapfen sind an der Vorderseite des Nietstempels 32 drei vorstehende Nietköpfe 33 angeordnet. Die Nietköpfe 33 sind elektrisch auf eine Niettemperatur beheizt, so dass ein freies Ende des Nietzapfens 6 aus einem thermoplastischen Material plastisch zu einem Nietkopf verformt werden kann, um so eine feste Nietverbindung zu bilden. Zur Begrenzung und exakten Einstellung des Hubes beim Vernieten ist an der Linearführung 35 eine Stellschraube 38 vorgesehen, welche als ein Anschlag für den Nietstempel 32 dient.

## Patentansprüche

1. Vorrichtung zum Fertigen eines komplex aufgebauten Werkstücks (1), welches aus mindestens zwei Bauteilen (3, 4, 5) und einer Dekorschicht aufgebaut ist, mit
- einer Halterung (20) zum Halten des Werkstücks (1), wobei in der Halterung (20) die Bauteile (3, 4, 5) über eine Steckverbindung verbunden sind, wobei an zumindest einem der Bauteile (3, 4, 5) mindestens ein Nietzapfen (6) angeordnet ist, welcher durch eine Nietbohrung (7) in ein anderes Bauteil (3, 4, 5) gesteckt ist, und
- einer Nieteinrichtung (30) mit mindestens einem beheizbaren Nietstempel (32), mit welchem der mindestens eine Nietzapfen (6) thermisch verformbar und die Bauteile (3, 4, 5) zu dem Werkstück (1) vernietbar sind und eine Nietverbindung zwischen den Bauteilen (3, 4, 5) gebildet ist, während das Werkstück (1) in der Halterung (20) aufgenommen ist,
- wobei der mindestens eine Nietzapfen an dem Bauteil stiftförmig oder keilförmig ausgebildet ist, so dass dieser durch eine Nietbohrung in einen rückwärtigen Bereich ragt, und
- mindestens einem Umbugstempel (52), mit welchem an dem in der Halterung (20) angeordneten Werkstück (1) die Dekorschicht, welche an einem Rand des Werkstücks (1) übersteht, an eine Rückseite des Randes des Werkstücks (1) umlegbar ist,
- wobei die Vorrichtung ausgebildet ist, die zumindest zwei Bauteile zu dem komplexen Werkstück mit dem umgebugten Rand zu verbinden.

2. Vorrichtung nach Anspruch 1,
**dadurch gekennzeichnet,**
**dass** der mindestens eine Nietstempel (32) verfahrbar gelagert ist und über einen Stellzylinder (36) zwischen einer Nietposition und einer Rückzugsposition verstellbar ist, in welcher der Nietstempel (32) von dem Werkstück (1) beabstandet ist.

3. Vorrichtung nach Anspruch 1 oder 2,
**dadurch gekennzeichnet,**
**dass** der Stellzylinder (36) mit einem Druckfluid betätigbar ist.

4. Vorrichtung nach einem der Ansprüche 1 bis 3,
**dadurch gekennzeichnet,**
**dass** der Nietstempel (32) elektrisch beheizt ist.

5. Vorrichtung nach einem der Ansprüche 1 bis 4,
**dadurch gekennzeichnet,**
**dass** eine Sensoreinrichtung vorgesehen ist, mit welcher das Vorhandensein der Bauteile (3, 4, 5) in der Halterung (20) und/oder eine korrekte Vernietung überprüfbar sind.

6. Verfahren zum Fertigen eines komplex aufgebauten Werkstücks (1), welches aus mindestens zwei Bauteilen (3, 4, 5) und einer Dekorschicht gebildet wird, mit einer Vorrichtung nach einem der Ansprüche 1 bis 5,
**dadurch gekennzeichnet,**
- **dass** die Bauteile (3, 4, 5) in einer Halterung (20) angeordnet werden,
- **dass** die Bauteile (3, 4, 5) vor oder bei dem Einsetzen des Werkstücks (1) in die Halterung (20) über eine Steckverbindung zu dem Werkstück (1) verbunden werden,
- **dass** zum Bilden einer Nietverbindung zwischen den Bauteilen (3, 4, 5) mittels einer Nieteinrichtung (30) mit mindestens einem beheizbaren Nietstempel (32) die Bauteile (3, 4, 5) zu dem Werkstück (1) vernietet werden, während das Werkstück (1) in der Halterung (20) aufgenommen ist, wobei der mindestens eine Nietzapfen an dem Bauteil stiftförmig oder keilförmig vorgesehen wird, so dass dieser durch eine Nietbohrung in einen rückwärtigen Bereich ragt, und
- **dass** mittels mindestens einem Umbugstempel (32) die Dekorschicht, welche an einem Rand des Werkstücks (1) übersteht, umgelegt und an einer Rückseite des Randes des Werkstücks (1) angelegt wird.

7. Verfahren nach Anspruch 6,
**dadurch gekennzeichnet,**
**dass** der mindestens eine Nietstempel (32) mittels eines Stellzylinders (36) zwischen eine Nietposition und einer Rückzugsposition verstellt wird, in welcher der Nietstempel (32) von dem Werkstück (1) beabstandet ist.

8. Verfahren nach Anspruch 6 oder 7,
**dadurch gekennzeichnet,**
**dass** der Nietzapfen (6) durch den Nietstempel (32) thermisch verformt und ein Nietkopf zum Bilden der Nietverbindung ausgebildet wird.

9. Verfahren nach einem der Ansprüche 6 bis 8,
**dadurch gekennzeichnet,**
**dass** zumindest ein Bauteil (3, 4, 5) aus einem thermoplastischen Material gebildet wird.

10. Verfahren nach einem der Ansprüche 6 bis 9,
**dadurch gekennzeichnet,**
**dass** der Nietstempel (32) auf eine Niettemperatur aufgeheizt wird, welche über einer Umformtemperatur des Materials des Nietzapfens (6) liegt.

11. Verfahren nach einem der Ansprüche 7 bis 10,
**dadurch gekennzeichnet,**
**dass** gleichzeitig mit dem Vernieten der Bauteile (3, 4, 5) das Umbugen der überstehenden Dekorschicht an dem Werkstück (1) erfolgt, welches in der Halterung (20) aufgenommen ist.

12. Verfahren nach einem der Ansprüche 6 bis 11,
**dadurch gekennzeichnet,**
**dass** mittels einer Sensoreinrichtung das Vorhandensein der Bauteile (3, 4, 5) an dem Werkstück (1) in der Halterung (20) und/oder eine korrekte Vernietung überprüft werden.

13. Verfahren nach Anspruch 12,
**dadurch gekennzeichnet,**
**dass** ein Vernieten und/oder Umbugen durch eine Steuereinheit veranlasst wird, wenn über die Sensoreinrichtung festgestellt ist, dass die Bauteile (3, 4, 5) korrekt vernietet worden sind.

## Claims

1. Device for producing a workpiece (1) of complex construction which is constructed of at least two components (3, 4, 5) and a decorative layer, having
- a holder (20) for holding the workpiece (1), wherein in the holder (20) the components (3, 4, 5) are connected by way of a plug connection, wherein on at least one of the components (3, 4, 5) at least one rivet peg (6) is arranged which is inserted through a rivet bore (7) into another component (3, 4, 5), and
- a riveting means (30) with at least one heatable riveting die (32), with which the at least one rivet peg (6) is thermally deformable and the components (3, 4, 5) can be riveted to the workpiece (1) and a rivet connection is formed between the components (3, 4, 5) while the workpiece (1) is received in the holder (20),
- wherein the at least one rivet peg on the component is of pin-shaped or wedge-shaped design so that it projects through a rivet bore into a rearward area, and
- at least one edge-folding die (52), with which the decorative layer that is located on the workpiece (1) arranged in the holder (20) and protrudes from an edge of the workpiece (1) can be folded over towards a backside of the edge of the workpiece (1),
- wherein the device is designed to connect the at least two components to the complex workpiece with the edge-folded edge.

2. Device according to claim 1,
**characterized in that**
the at least one riveting die (32) is supported in a movable manner and adjustable by way of a positioning cylinder (36) between a riveting position and a retracted position, in which the riveting die (32) is spaced from the workpiece (1).

3. Device according to claim 1 or 2,
**characterized in that**
the positioning cylinder (36) can be actuated by a pressurized fluid.

4. Device according to any one of claims 1 to 3,
**characterized in that**
the riveting die (32) is heated electrically.

5. Device according to any one of claims 1 to 4,
**characterized in that**
a sensor means is provided, with which the presence of the components (3, 4, 5) in the holder (20) and/or a correct riveting can be verified.

6. Method for producing a workpiece (1) of complex construction which is formed of at least two components (3, 4, 5) and a decorative layer, with a device according to any one of claims 1 to 5,
**characterized in that**
- the components (3, 4, 5) are arranged in a holder (20),
- before or during the placement of the workpiece (1) into the holder (20) the components (3, 4, 5) are connected by way of a plug connection to the workpiece (1),
- to form a rivet connection between the components (3, 4, 5) the said components (3, 4, 5) are riveted to the workpiece (1) by means of a riveting means (30) with at least one heatable riveting die (32), while the workpiece (1) is received in the holder (20), wherein the at least one rivet peg on the component is provided in a pin-shaped or wedge-shaped manner so that it projects through a rivet bore into a rearward area, and
- **in that** by means of at least one edge-folding die (52) the decorative layer which protrudes from an edge of the workpiece (1) is folded over and placed against a backside of the edge of the workpiece (1).

7. Method according to claim 6,
**characterized in that**
the at least one riveting die (32) is adjusted by means of a positioning cylinder (36) between a riveting position and a retracted position, in which the riveting die (32) is spaced from the workpiece (1).

8. Method according to claim 6 or 7,
**characterized in that**
the rivet peg (6) is deformed thermally by the riveting die (32) and a rivet head is designed in order to form the rivet connection.

9. Method according to any one of claims 6 to 8,
**characterized in that**
at least one component (3, 4, 5) is formed of a thermoplastic material.

10. Method according to any one of claims 6 to 9,
**characterized in that**
the riveting die (32) is heated to a riveting temperature which lies above a forming temperature of the material of the rivet peg (6).

11. Method according to any one of claims 7 to 10,
**characterized in that**
simultaneously with the riveting of the components (3, 4, 5) the edge-folding of the protruding decorative layer is effected on the workpiece (1) which is received in the holder (20).

12. Method according to any one of claims 6 to 11,
**characterized in that**
by means of a sensor means the presence of the components (3, 4, 5) on the workpiece (1) in the holder (20) and/or a correct riveting are verified.

13. Method according to claim 12,
**characterized in that**
a riveting and/or edge-folding is caused by a control unit if, by way of the sensor means, it has been established that the components (3, 4, 5) have been riveted correctly.

## Revendications

1. Dispositif de fabrication d'une pièce (1) à structure complexe, laquelle est construite à partir d'au moins deux composants (3, 4, 5) et d'une couche décorative, avec
- un support (20) pour maintenir la pièce (1) ; les composants (3, 4, 5) étant reliés dans le support (20) par le biais d'une liaison par enfichage ; au moins une broche de rivetage (6), qui est enfichée par un perçage pour rivet (7) dans un autre composant (3, 4 5), étant disposée au niveau d'au moins un des composants (3, 4, 5), et
- un dispositif de rivetage (30) avec au moins une bouterolle (32) pouvant être chauffée, avec laquelle l'au moins une broche de rivetage (6) est thermiquement déformable et les composants (3, 4, 5) peuvent être rivetés pour former la pièce (1) et une liaison par rivetage est formée entre les composants (3, 4, 5), pendant que la pièce (1) est reçue dans le support (20),
- dans lequel l'au moins une broche de rivetage est réalisée en forme de tige ou en forme de cale au niveau du composant de sorte que celle-ci fasse saillie par un perçage pour rivet dans une zone arrière, et
- au moins un poinçon de rembordement (52), avec lequel au niveau de la pièce (1) disposée dans le support (20), la couche décorative, qui dépasse au niveau d'un bord de la pièce (1), peut Être repliée au niveau d'une face arrière du bord de la pièce (1),
- dans lequel le dispositif est réalisé pour relier les au moins deux composants pour former la pièce complexe avec le bord rembordé.

2. Dispositif selon la revendication 1,
**caractérisé en ce que**
l'au moins une bouterolle (32) est logée de manière déplaçable et est réglable par le biais d'un vérin de réglage (36) entre une position de rivetage et une position de retrait, dans laquelle la bouterolle (32) est espacée de la pièce (1).

3. Dispositif selon la revendication 1 ou 2,
**caractérisé en ce que**
le vérin de réglage (36) est actionnable avec un fluide sous pression.

4. Dispositif selon l'une quelconque des revendications 1 à 3,
**caractérisé en ce que**
la bouterolle (32) est chauffée électriquement.

5. Dispositif selon l'une des revendications 1 à 4,
**caractérisé en ce que**
un dispositif de détection est prévu, avec lequel la présence des composants (3, 4, 5) dans le support (20) et/ou un rivetage correct peuvent être vérifiés.

6. Procédé de fabrication d'une pièce (1) à structure complexe, laquelle est formée d'au moins deux composants (3, 4, 5) et d'une couche décorative, avec un dispositif selon l'une quelconque des revendications 1 à 5,
**caractérisé**
- **en ce que** les composants (3, 4, 5) sont disposés dans un support (20),
- **en ce que** les composants (3, 4, 5) sont reliés pour former la pièce (1) avant ou lors de l'insertion de la pièce (1) dans le support (20) par le biais d'une liaison par enfichage,
- **en ce que** pour la formation d'une liaison par rivetage entre les composants (3, 4, 5) au moyen d'un dispositif de rivetage (30) avec au moins une bouterolle (32) pouvant être chauffée, les composants (3, 4, 5) sont rivetés pour former la pièce (1), pendant que la pièce (1) est reçue dans le support (20), dans lequel l'au moins une broche de rivetage est prévue en forme de tige ou en forme de cale au niveau du composant de sorte que celle-ci fasse saillie par un perçage pour rivet dans une zone arrière, et
- **en ce que** la couche décorative, qui dépasse au niveau d'un bord de la pièce (1), est repliée au moyen d'au moins un poinçon de rembordement (32) et est appliquée au niveau d'une face arrière du bord de la pièce (1).

7. Procédé selon la revendication 6,
**caractérisé en ce que**
l'au moins une bouterolle (32) est réglée au moyen d'un vérin de réglage (36) entre une position de rivetage et une position de retrait, dans laquelle la bouterolle (32) est espacée de la pièce (1).

8. Procédé selon la revendication 6 ou 7,
**caractérisé en ce que**
la broche de rivetage (6) est déformée thermiquement par la bouterolle (32) et une tête de rivet est réalisée pour former la liaison par rivetage.

9. Procédé selon l'une des revendications 6 à 8,
**caractérisé en ce que**
au moins un composant (3, 4, 5) est formé dans un matériau thermoplastique.

10. Procédé selon l'une des revendications 6 à 9,
**caractérisé en ce que**
la bouterolle (32) est chauffée à une température de rivetage, qui est supérieure à une température de déformation du matériau de la broche de rivetage (6).

11. Procédé selon l'une des revendications 7 à 10,
**caractérisé en ce que**
le rembordement de la couche décorative en saillie au niveau de la pièce (1), qui est reçue dans le support (20), a lieu en même temps que le rivetage des composants (3, 4, 5).

12. Procédé selon l'une quelconque des revendications 6 à 11,
**caractérisé en ce que**
la présence des composants (3, 4, 5) au niveau de la pièce (1) dans le support (20) et/ou un rivetage correct peuvent être vérifiés au moyen d'un dispositif de détection.

13. Procédé selon la revendication 12,
**caractérisé en ce que**
un rivetage et/ou rembordement est initié par une unité de commande, lorsqu'il est constaté par le biais du dispositif de détection que les composants (3, 4, 5) ont été rivetés correctement.
